# EUROPEAN PATENT SPECIFICATION

(11) **EP 1 937 389 B1**
(45) Date of publication and mention of the grant of the patent: **21.03.2012**
(21) Application number: 06779148.3
(22) Date of filing: 17.08.2006
(51) Int. Cl.: B01D 53/26, B01D 53/32, H01M 8/12

(54) **ELECTROCHEMICAL REACTOR COMPRISING OXYGEN ION PUMP FOR AFTER-TREATMENT OF COMBUSTIBLE GAS RESIDUES**
ELEKTROCHEMISCHER REAKTOR MIT SAUERSTOFFIONENPUMPE ZUR NACHBEHANDLUNG VON RÜCKSTÄNDEN BRENNBARER GASE
REACTEUR ELECTROCHIMIQUE COMPRENANT UNE POMPE A IONS OXYGENE POUR LE POST-TRAITEMENT DES RESIDUS GAZEUX DE COMBUSTIBLES

(30) Priority: 07.10.2005 GB 0520472
(43) Date of publication of application: 02.07.2008
(73) Proprietor: Edwards Limited, Crawley, West Sussex RH10 9LW (GB)
(72) Inventor: GRANT, Robert, Bruce, West Sussex RH10 2LW (GB)
(74) Representative: Clark, Charles Robert
(86) International application number: PCT/GB2006/003076
(87) International publication number: WO 2007/042743

(56) References cited:
- EP-A2- 0 438 902
- EP-A2- 0 949 505
- US-A- 3 650 934
- US-A- 5 643 435
- US-A1- 2002 022 568

## Description

The present invention relates to a method of, and apparatus for, pumping a gas stream containing a combustible gas, such as hydrogen or a hydrocarbon.

Many processes use or generate potentially flammable mixtures containing fuels such as hydrogen and hydrocarbons. For example, epitaxial deposition processes are increasingly used for high-speed semiconductor devices, both for silicon and compound semiconductor applications. Epitaxial deposition utilizes a silicon source gas, typically silane or one of the chlorosilane compounds, such as trichlorosilane or dichlorosilane, in a hydrogen atmosphere at high temperature, typically around 800 - 1100°C, and under a vacuum condition. In such deposition processes, the residence time of the deposition gases in the processing chamber is relatively short, and only a small proportion of the gas supplied to the chamber is consumed during the deposition process. Consequently, the majority of the deposition gases supplied to the chamber are exhausted from the chamber together with by-products from the deposition process.

Whilst the exhaust gas itself is not flammable, the pumping of such mixtures requires great care to be placed on the leak integrity of the foreline and exhaust lines from the pump to ensure that there is no ingress of air into the lines. Once the gas mixture is above its lower explosive limit (LEL), any ignition sources within the pump could result in the generation of hazardous flame fronts travelling through the pump into the exhaust lines.

A common technique used to avoid ignition of a flammable gas stream is introduce into the gas stream an excess of an inert purge gas, typically nitrogen, to bring the gas stream below its LEL, and then to subsequently convey the gas stream to an abatement device, typically a burner, to controllably convert the combustible gases into other species prior to the emission of the gas stream into the atmosphere. However, supplying purge gas into the gas stream can reduce the efficiency of the abatement device and is both wasteful and costly. Furthermore, the use of a burner to destroy the combustible gases may lead to the release into the atmosphere of other, undesirable chemicals as a by-product of the destruction of the combustible gas.

Documents EP-A2-0 438 902 and US 2002/0022568 describe membrane reactors through which oxygen passes to form oxygen ions to react with hydrogen containing substances.

In a first aspect, the present invention provides a method of pumping a gas stream containing a combustible gas, comprising the steps of conveying the gas stream to one side of an ionic conducting membrane at a pressure less than 50 mbar, exposing the other side of the membrane to an oxidising gas, applying a potential difference across the membrane so that reactive oxidising species permeate across the membrane to react with the combustible gas to produce at least water vapour, and subsequently receiving the gas at a vacuum pump, wherein the water vapour is condensed from the gas stream upstream of or within the vacuum pump.

As the total pressure of a potentially explosive gas mixture is reduced, the catastrophic nature of a gas phase chemical reaction involving a combustible gas and an oxidant also reduces. By conveying reactive oxidising species such as oxygen anions or radicals to a combustible gas at a sub-atmospheric pressure of less than 50 mbar, more preferably less than 10 mbar, the amount of inert purge gas that need to be added to the gas stream to reduce the gas stream below its lower explosive limit can be reduced, preferably to zero so that complex purge gas systems, and the cost associated therewith, can be avoided.

An advantage associated with the use of an ionic conducting membrane such as an yttrium stabilised zirconium or a gadolinium doped ceria oxygen anion conductor is that a potential difference needs to be applied across the membrane in order to actuate the permeation of oxidising species through the membrane, otherwise the membrane is impervious to the oxidising species. Thus, in the event of a power failure, transference of oxygen anions to the gas stream is inhibited, thereby avoiding the generation of a potentially explosive atmosphere within the membrane. By controlling the magnitude of the potential difference applied across the membrane, the rate of permeation of the oxidising species can be controlled so that the rate at which the oxidising species enter the gas stream is sufficient to react with substantially all of the combustible gas within the gas stream. The absolute magnitude of the current used to drive the oxygen anions across the membrane will generally depend upon the surface area of electrodes located on the sides of the membrane, the partial pressure of the oxidising gas and the amount of combustible gas within the gas stream. The potential difference applied across the membrane can be adjusted in dependence on the output of a sensor used to measure the amount of oxygen present within the gas stream downstream from the membrane. For example, if the sensor detects no oxygen, this can provide an indication that there is insufficient permeation of oxygen anions across the membrane to react with all of the combustible gas, and so the potential difference or current density may be increased gradually until the sensor detects that oxygen is present in the gas stream.

Furthermore, since at least one, or in the case of hydrogen all, of the products of the reaction between the combustible gas and the oxidising species are is condensable, the size of the vacuum pump required to pump the gas stream can be reduced, as for example each slm of hydrogen contained within the gas stream generates an additional slm of pumping speed when the condensable species such as water vapour are condensed from the gas stream.

The water vapour may be condensed from the gas stream within a condenser located between the membrane and the vacuum pump. Alternatively, the vacuum pump may have a pumping mechanism that exposes the gas stream to water and wherein the water vapour is condensed from the gas stream. Examples of a vacuum pump having such a pumping mechanism include a liquid ring pump and a liquid ejector pump.

As mentioned above, the potential difference can be applied across the membrane using a first electrode on said one side of the membrane and a second electrode on said other side of the membrane, wherein at least one of the electrodes comprises catalytic material, such as platinum, to improve the reaction kinetics. Means may be provided for controlling the temperature of the membrane. Depending on the nature of the membrane, the membrane may need to be heated to an elevated temperature to have the required degree of conductivity for the oxidising species. At temperatures below a critical temperature (T_{c}) the electrolyte material may be non-conducting, but at temperatures above T_{c} the electrolyte may become progressively more conductive. A heater may be conveniently provided about the membrane to heat the membrane to the required temperature.

In the preferred embodiment, the membrane is in the form of a cylinder having a bore through which the gas stream is drawn by the vacuum pump. In order to increase the efficiency of the destruction, a plurality of said cylindrical membranes may be provided in parallel. Alternatively, the membrane may have a plate-like structure.

The oxidising gas can be derived from a gaseous source of oxygen. Typically atmospheric air is used as a gaseous source of oxygen, although other gas compositions can be used.

In a second aspect the present invention provides a system for pumping a gas stream containing a combustible gas, the system comprising an ionic conducting membrane a vacuum pump for conveying the gas stream to one side of the membrane at a pressure less than 50 mbar, the other side of the membrane being exposed to an oxidising gas means for applying a potential difference across the membrane so that reactive oxidising species permeate across the membrane to react with the combustible gas to produce at least water vapour and condensing means for receiving the gas stream from the membrane and condensing the water vapour from the gas stream wherein the condensing means comprises: either a condenser and said vacuum pump is located downstream from the condenser for drawing the gas stream through the condenser; or said vacuum pump, the vacuum pump having a pumping mechanism that exposes the gas stream to water and wherein the water vapour is condensed from the gas stream; or said vacuum pump, the vacuum pump being arranged to receive the gas stream from the membrane and having a pumping mechanism that exposes the gas stream to water so that the water vapour is condensed from the gas stream.

Features described above in relation to method aspects of the invention are equally applicable to system aspects of the invention, and vice versa.

Preferred features of the present invention will now be described with reference to the accompanying drawings, in which:
Figure 1 illustrates a first embodiment of a system for pumping a gas stream containing a combustible gas;
Figure 2 illustrates in more detail the configuration of the electrochemical cell and condenser of the system of Figure 1;
Figure 3 illustrates a system for controlling the potential difference applied across the electrochemical membrane of the cell of Figure 2;
Figure 4 illustrates a section view through an electrochemical cell having an array of tubular electrochemical membranes;
Figure 5 illustrates a second embodiment of a system for pumping a gas stream containing a combustible gas; and
Figure 6 illustrates the pumping mechanism of a pump suitable for use in the system of Figure 5.

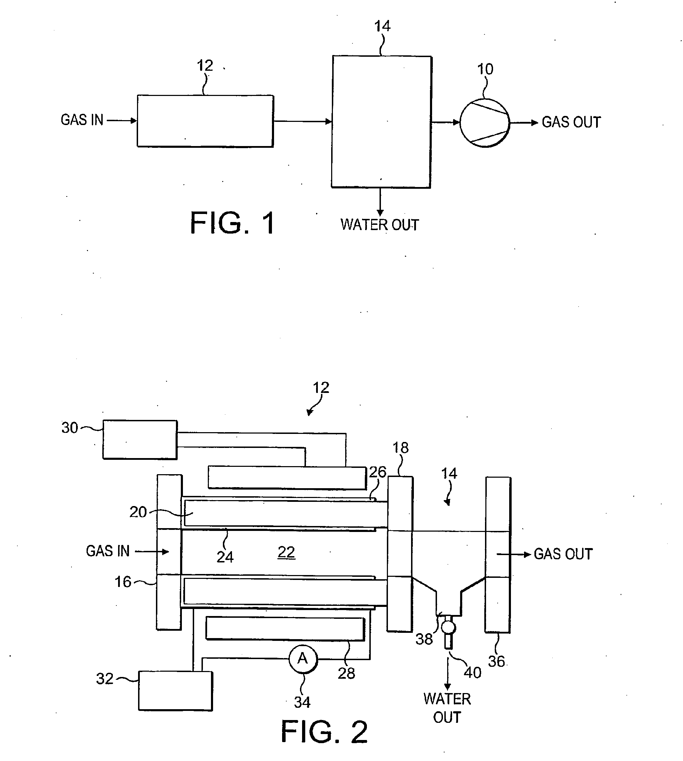

With reference to Figure 1, a first embodiment of a system for pumping a gas stream containing a combustible gas comprises a vacuum pump 10 for drawing the gas stream at a sub-atmospheric pressure through an electrochemical cell 12 and, downstream from the cell 12, a condenser 14. The vacuum pump 10 may have any pumping mechanism that is suitable for pumping the gas stream at the desired sub-atmospheric pressure, preferably less than 50 mbar, more preferably less than 10 mbar, through the cell 12. The vacuum pump 10 may exhaust the gas stream at or around atmospheric pressure, or at another sub-atmospheric pressure, in which case any additional vacuum pump may be located downstream from the vacuum pump 10 for receiving the gas stream exhausted from the vacuum pump and exhausting the gas at or around atmospheric pressure.

Examples of the electrochemical cell 12 and the condenser 14 are illustrated in more detail in Figure 2. The cell 12 comprises a flanged inlet 16 for receiving the gas stream and a flanged outlet 18 through which the gas stream is expelled from the cell 12 to the condenser 14. An electrochemical membrane 20 is located between the flanged inlet 16 and flanged outlet 18. The membrane 20 is in the form of a cylindrical membrane having a bore 22 through which the gas stream is drawn by the vacuum pump 10. In this example, the membrane 20 is formed from an oxygen anion conductor, for example yttrium stabilised zirconium or gadolinium doped ceria.

A first electrode 24 is formed on the inner surface of the membrane 20 for exposure to the gas stream, and a second electrode 26 is formed on the outer surface of the membrane 20 for exposure to an oxidising gas, for example air. The electrodes 24, 26 may be deposited using a technique such as vacuum sputtering or applying any suitable commercially available "ink" to the surface. In the event that one of the electrodes is formed on the surface of the membrane 20 using ink, the whole assembly must be fired in a suitable atmosphere determined by the nature of the ink. The first electrode 24 is preferably formed from a material that is able to catalyse the oxidation of a hydrocarbon to carbon dioxide and water, and/or the oxidation of hydrogen to water. One suitable example is platinum. The second electrode 26 is preferably formed from a material that is above to catalyse the dissociative adsorption of oxygen or other reactive oxidising species. Again, one suitable example is platinum. Where a gas other than air is to be used as the source of the oxidising gas, the cell 12 may be surrounded by a housing having an inlet for receiving a stream of the oxidising gas and an outlet for expelling this stream from the housing.

Depending on the nature of the material used to form the membrane 20, the membrane may require heating to raise its temperature above a critical temperature T_{c} at which the membrane 20 is able to conduct the reactive oxidising species, for example oxygen anions. In view of this, the cell 12 may comprise a heater 28 extending about the membrane 20 for heating the membrane 20 to the required temperature, which, depending again on the material used to form the membranes 26 may be at least 300°C. A heater controller 30 may be provided for controlling the heater 28, for example in response to temperature signals received from a thermocouple located proximate the membrane 20.

A low voltage power supply 32 is provided to apply a potential difference between the first and second electrodes 24, 26 and thus across the membrane 20. A voltammeter 34 is also provided to measure the potential difference between the electrodes 24, 26. Where a housing surrounds the membrane 20, a gas tight electrical feed through may permit electrical connections to the constant power supply 32 and the voltammeter 34 to pass to the electrodes 24, 26.

In use, the outer surface of the membrane 20 is exposed to an oxidising gas, conveniently air, and a potential difference is applied across the membrane 20 using the power supply 32. At the second electrode 26, oxygen within the air is reduced to form oxygen anions:

O₂ + 4e⁻ 2O²⁻

where Vₒ is a doubly charged oxygen anion vacancy and Oₒ is a filled oxygen anion site in the membrane 20. When the temperature of the membrane 20 is above T_{c}, oxygen anions will permeate across the membrane 20 at a rate dependent, amongst other things, on the surface area of the electrodes 24, 26, the partial pressure of oxygen at the outer surface of the membrane 20 and the potential difference applied across the membrane 20.

At the first electrode 24, the oxygen anions react with a combustible gas contained within the gas stream conveyed through the bore 22 of the membrane and thus to the inner surface of the membrane. For example, for a combustible gas having the general formula CₓH_{y}, where x ≥ 0 and y ≥2, the reaction proceeds according to the general equation:

CₓH_{y} + (2x+y/2)O₂ ⇆ xCO₂ + y/2H₂O

to produce water vapour and, when x > 1, carbon dioxide.

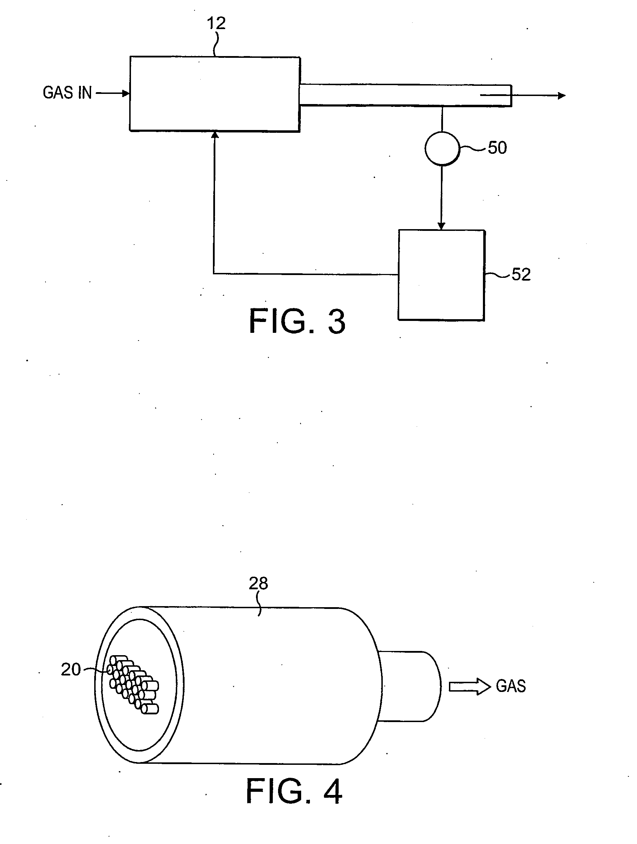

As illustrated in Figure 3, a gas sensor 50 may be located downstream from the cell 12 for detecting the amount of oxygen present within the gas stream downstream from the cell 12. The sensor 50 may output a signal to a controller 52 depending on, say, the amount of oxygen contained within the gas stream. When there is no oxygen contained within this gas stream, this can be an indication of incomplete reduction of the combustible gas within the cell 12, and so in response to the signal output from the sensor 50 the controller 52 may output a signal to the cell 12 to increase the potential difference applied across the membrane 20 to in turn increase the rate at which the oxygen anions permeate across the membrane 20 until oxygen is detected within the gas stream.

For relatively high flow rates of hydrogen (several slm) or hydrocarbon (above 100 slm) within the gas stream, the number of membranes 20 may be increased to increase the surface area of membrane exposed both to the combustible gas and the oxidising gas. For example, as illustrated in Figure 4 an array of cylindrical membranes 20, each having electrodes formed on their respective inner and outer surfaces, may be arranged in parallel for receiving the gas stream. Each membrane 20 may be connected at one end thereof to a respective outlet of an inlet manifold (not shown) having an inlet connected to the flanged inlet 16, and at the other end thereof to a respective inlet of an outlet manifold (not shown) having an outlet connected to the flanged outlet 18 so that the gas stream is conveyed through the bores 22 thereof. For example, a 5x5 array of membranes 20 each having a diameter of 1 cm and an active length of 20 cm can provide a surface area of approximately 1600 cm². With a current density of 100 mA/cm² established across each membrane, an oxygen flux into the gas stream of approximately 5.6 slm can be achieved.

Returning to Figure 2, the gas stream passing through the flanged outlet 18 will contain water vapour from the oxidation of the combustible gas within the cell 12. In this example, the gas stream is subsequently drawn by the vacuum pump 10 through a condenser 14 to condense the water vapour from the gas stream. The construction and operation of a condenser is well known, and so will not be described in detail here. The water condensed from the gas stream by the condenser 14 is collected in a water collection vessel 38 of the condenser 14, and is periodically or continuously drained from the condenser 14 using water drain valve 40. By condensing the water vapour from the gas stream upstream from the vacuum pump 10, the size of the vacuum pump can be reduced and/or the pumping speed of the gas stream though the system can be enhanced.

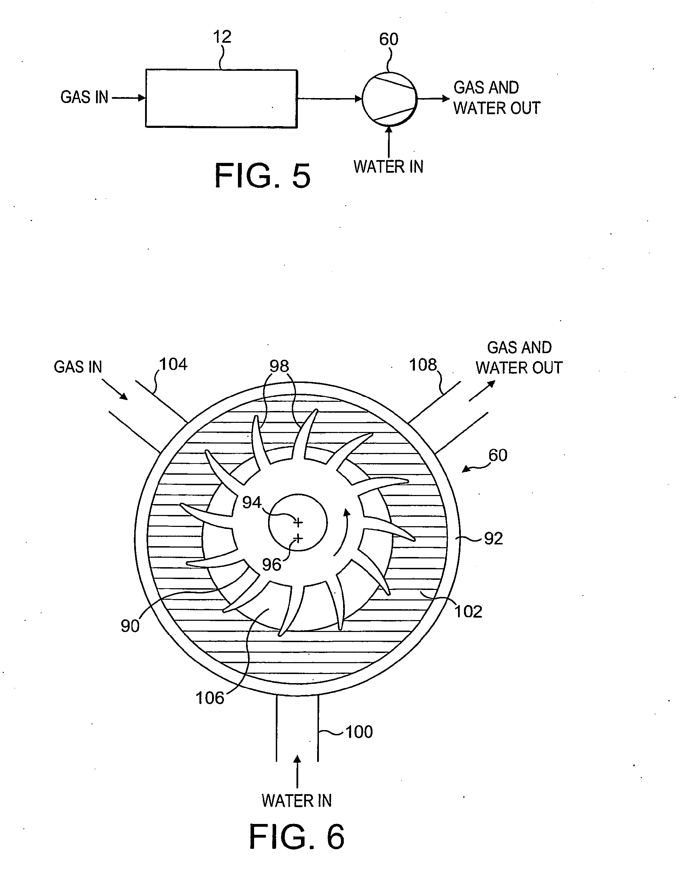

A second embodiment of a system for pumping a gas stream containing a combustible gas is illustrated in Figure 5. This second embodiment differs from the first embodiment in so far as the vacuum pump 10 and condenser 14 of the first embodiment are replaced by a vacuum pump 60 having a pumping mechanism that exposes the gas stream to water and wherein the water vapour is condensed from the gas stream. Examples of a suitable vacuum pump include a water ejector pump and, as illustrated in Figure 6, a water ring pump. With reference to Figure 6, a water ring pump 60 generally has a pumping mechanism comprising a rotor 90 rotatably mounted in an annular housing 92 such that the rotor axis 94 is eccentric to the central axis 96 of the housing 92. The rotor 90 has blades 98 that extend radially outwardly therefrom and are equally spaced around the rotor 90. With rotation of the rotor 90, the blades 98 engage water or other aqueous solution entering the housing 92 from inlet 100 and form it into an annular ring 102 inside the housing 92. The water is conveyed to the pump 60 from a suitable source (not shown), for example a water tank or other reservoir.

The gas stream enters the pump 60 through gas inlet 104, and is pulled into the spaces 106 between adjacent blades 98. The water vapour contained in the gas stream condenses within the annular ring 102 formed within the pump 60. The pump 60 is provided with an exhaust 108 on the outlet side thereof for exhausting from the pump 60 a liquid/gas mixture of a liquid solution comprising the liquid from the annular ring 102, any liquid-soluble components of the gas stream, and any gaseous species remaining from the gas stream. As water is conveyed from the exhaust 108, the annular ring 102 is replenished by supplying fresh liquid to the housing 92 via inlet 100. The liquid/gas mixture stream exhaust from the pump 60 may be subsequently separated in a discharge separator (not shown) located downstream from the exhaust 108 of the pump 60. The gas may be exhaust to the atmosphere, and the liquid collected for safe disposal. Alternatively, the liquid may be treated for return to the source for re-use.

This second embodiment of the pumping system therefore does not require a separate condenser for condensing the water vapour from the gas stream upstream from the vacuum pump, which can reduce system costs.

## Claims

1. A method of pumping a gas stream containing a combustible gas, comprising the steps of conveying the gas stream to one side of an ionic conducting membrane (20) at a pressure less than 50 mbar, exposing the other side of the membrane to an oxidising gas, applying a potential difference across the membrane (20) so that reactive oxidising species permeate across the membrane to react with the combustible gas to produce at least water vapour, and subsequently receiving the gas at a vacuum pump (10), wherein the water vapour is condensed from the gas stream upstream of or within the vacuum pump (10).

2. A method according to Claim 1, wherein the water vapour is condensed from the gas stream within a condenser (14) located between the membrane (20) and the vacuum pump (10).

3. A method according to Claim 1, wherein the vacuum pump (10) has a pumping mechanism that exposes the gas stream to water and wherein the water vapour is condensed from the gas stream.

4. A method according to Claim 3, wherein the vacuum pump (10) comprises one of a liquid ring pump and a liquid ejector pump.

5. A method according to any preceding claim, wherein the potential difference is applied across the membrane (20) using a first electrode (24) on said one side of the membrane and a second electrode (26) on said other side of the membrane (20), and wherein at least one of the electrodes (24, 26) comprises catalytic material.

6. A method according to any preceding claim, wherein the membrane (20) is heated to a temperature of at least 300°C.

7. A method according to any preceding claim, wherein the membrane (20) is in the form of a cylinder having a bore (22) through which the gas stream is drawn by the vacuum pump (10).

8. A method according to any preceding claim, wherein the amount of oxygen present within the gas stream downstream from the membrane (20) is detected, and the potential difference applied across the membrane (20) is controlled in response to the detected amount of oxygen.

9. A method according to any preceding claim, wherein the gas stream is conveyed to said one side of the membrane (20) at a pressure less than 10 mbar.

10. A system for pumping a gas stream containing a combustible gas, the system comprising:
an ionic conducting membrane (20);
a vacuum pump (10) for conveying the gas stream to one side of the membrane (20) at a pressure less than 50 mbar, the other side of the membrane (20) being exposed to an oxidising gas;
means (32) for applying a potential difference across the membrane (20) so that reactive oxidising species permeate across the membrane (20) to react with the combustible gas to produce at least water vapour; and
condensing means (14, 10) for receiving the gas stream from the membrane (20) and condensing the water vapour from the gas stream wherein the condensing means comprises either:
a condenser (14) and said vacuum pump (10) is located downstream from the condenser (14) for drawing the gas stream through the condenser (14); or
said vacuum pump (10), the vacuum pump having a pumping mechanism that exposes the gas stream to water and wherein the water vapour is condensed from the gas stream; or
said vacuum pump (10), the vacuum pump being arranged to receive the gas stream from the membrane and having a pumping mechanism that exposes the gas stream to water so that the water vapour is condensed from the gas stream.

11. A system according to Claim 10, wherein the pump (10) comprises one of a liquid ring pump and an ejector pump.

12. A system according to any of Claims 10 and 11, wherein the pump is configured to draw the gas stream to said one side of the membrane (20) at a pressure less than 10 mbar.

13. A system according to any of Claims 10 to 12, wherein the means (32) for applying a potential difference across the membrane (20) comprises a first electrode (24) on said one side of the membrane (20), and a second electrode (26) on said other side of the membrane (20) and wherein at least one of the electrodes (24, 26) comprises catalytic material.

14. A system according to Claim 13, wherein the catalytic material comprises platinum.

15. A system according to any of Claims 10 to 14, comprising means (28, 30) for heating the membrane (20) to a temperature of at least 300°C.

16. A system according to any of Claims 10 to 15, wherein the membrane (20) is in the form of a cylinder having a bore (22) through which the gas stream is drawn by the vacuum pump (10).

17. A system according to Claim 16, comprising a plurality of said cylindrical membranes (20) connected in parallel.

18. A system according to any of Claims 10 to 17, comprising a sensor (50) for detecting the amount of oxygen present within the gas stream downstream from the membrane (20), and a controller (52) for controlling the potential difference applied across the membrane (20) in response to an output from the sensor (50).

## Patentansprüche

1. Verfahren zum Pumpen eines ein brennbares Gas enthaltendes Gasstroms, mit den Schritten des Förderns des Gasstroms auf eine Seite einer ionenleitenden Membran (20) bei einem Druck von weniger als 50 mbar, des Aussetzens der anderen Seite der Membran einem oxidierenden Gas, des Anlegens einer Potentialdifferenz über der Membran (20), so dass reaktive oxidierende Spezien die Membran durchdringen und mit dem brennbaren Gas reagieren, um mindestens Wasserdampf zu erzeugen, und des anschließenden Aufnehmens des Gases in einer Vakuumpumpe (10), wobei der Wasserdampf aus dem Gasstrom stromauf oder innerhalb der Vakuumpumpe (10) kondensiert wird.

2. Verfahren nach Anspruch 1, wobei der Wasserdampf aus dem Gasstrom innerhalb eines Kondensators (14) kondensiert wird, der zwischen der Membran (20) und der Vakuumpumpe (10) angeordnet ist.

3. Verfahren nach Anspruch 1, wobei die Vakuumpumpe (10) einen Pumpenmechanismus hat, der den Gasstrom Wasser aussetzt und wobei der Wasserdampf aus dem Gasstrom kondensiert wird.

4. Verfahren nach Anspruch 3, wobei die Vakuumpumpe (10) eine Flüssigkeitsringpumpe oder eine Flüssigkeitsejektorpumpe ist.

5. Verfahren nach irgendeinem vorhergehenden Anspruch, wobei die Potentialdifferenz über der Membran (20) unter Verwendung einer ersten Elektrode (24) auf der genannten einen Seite der Membran und einer zweiten Elektrode (26) auf der genannten anderen Seite der Membran (20) angelegt wird, und wobei mindestens eine der Elektroden (24, 26) katalytisches Material enthält.

6. Verfahren nach irgendeinem vorhergehenden Anspruch, wobei die Membran (20) auf eine Temperatur von mindestens 300°C erhitzt wird.

7. Verfahren nach irgendeinem vorhergehenden Anspruch, wobei die Membran (20) die Form eines Zylinders mit einer Bohrung (22) hat, durch welche der Gasstrom durch die Vakuumpumpe (10) angesaugt wird.

8. Verfahren nach irgendeinem vorhergehenden Anspruch, wobei die Menge von innerhalb des Gasstroms vorhandenem Sauerstoff stromab der Membran (20) erfasst wird und die über der Membran (20) angelegte Potentialdifferenz in Abhängigkeit von der erfassten Sauerstoffmenge gesteuert wird.

9. Verfahren nach irgendeinem vorhergehenden Anspruch, wobei der Gasstrom bei einem Druck von weniger als 10 mbar zu der genannten einen Seite der Membran (20) gefördert wird.

10. System zum Pumpen eines Gasstroms, der ein brennbares Gas enthält, wobei das System aufweist:
eine ionenleitende Membran (20),
eine Vakuumpumpe (10) zum Fördern des Gasstroms zu einer Seite der Membran (20) bei einem Druck von weniger als 50 mbar, wobei die andere Seite der Membran (20) einem oxidierenden Gas ausgesetzt ist,
Mittel (32) zum Anlegen einer Potentialdifferenz über der Membran (20), so dass reaktive oxidierende Spezien durch die Membran (20) hindurchdringen, um mit dem brennbaren Gas zum Erzeugen mindestens von Wasserdampf zu reagieren, und
Kondensationsmittel (14, 10) zum Aufnehmen des Gasstroms von der Membran (20) und Kondensieren des Wasserdampfs aus dem Gasstrom, wobei die Kondensationsmittel
entweder einen Kondensator (14) aufweisen und die Vakuumpumpe (10) stromab des Kondensators (14) angeordnet ist, um den Gasstrom durch den Kondensator (14) anzusaugen, oder
die Vakuumpumpe (10) umfasst, wobei die Vakuumpumpe einen Pumpenmechanismus aufweist, der den Gasstrom Wasser aussetzt und worin der Wasserdampf aus dem Gasstrom kondensiert wird,
oder die Vakuumpumpe (10) umfasst, wobei die Vakuumpumpe so angeordnet ist, dass sie den Gasstrom von der Membran aufnimmt und einen Pumpenmechanismus aufweist, der den Gasstrom Wasser aussetzt, so dass der Wasserdampf aus dem Gasstrom kondensiert wird.

11. System nach Anspruch 10, wobei die Pumpe (10) eine Flüssigkeitsringpumpe oder eine Ejektorpumpe ist.

12. System nach einem der Ansprüche 10 und 11, wobei die Pumpe so konfiguriert ist, dass sie den Gasstrom zu der genannten einen Seite der Membran (20) bei einem Druck von weniger als 10 mbar ansaugt.

13. System nach einem der Ansprüche 10 bis 12, wobei die Mittel (32) zum Anlegen einer Potentialdifferenz über der Membran (20) eine erste Elektrode (24) auf der genannten einen Seite der Membran (20) und eine zweite Elektrode (26) auf der genannten anderen Seite der Membran (20) umfassen, und wobei mindestens eine der Elektroden (24, 26) katalytisches Material enthält.

14. System nach Anspruch 13, wobei das katalytische Material Platin ist.

15. System nach einem der Ansprüche 10 bis 14, mit Mitteln (28, 30) zum Erhitzen der Membran (20) auf eine Temperatur von mindestens 300°C.

16. System nach einem der Ansprüche 10 bis 15, wobei die Membran (20) die Form eines Zylinders mit einer Bohrung (22) hat, durch welche der Gasstrom von der Vakuumpumpe (10) angesaugt wird.

17. System nach Anspruch 16, mit einer Mehrzahl der genannten zylindrischen Membranen (20), die parallel geschaltet sind.

18. System nach einem der Ansprüche 10 bis 17, mit einem Fühler (50) zum Erfassen der Menge des in dem Gasstrom vorhandenen Sauerstoffs stromab der Membran (20), und mit einem Regler (52) zur Steuerung der über der Membran (20) angelegten Potentialdifferenz in Abhängigkeit von einem Ausgangssignal des Fühlers (50).

## Revendications

1. Procédé de pompage d'un courant gazeux contenant un gaz combustible, comprenant les étapes consistant à acheminer le courant gazeux jusqu'à une première face d'une membrane conductrice ionique (20) à une pression inférieure à 50 mbar, à exposer l'autre face de la membrane à un gaz oxydant, à appliquer une différence de potentiel de part et d'autre de la membrane (20) de telle sorte que des espèces oxydantes réactive passent à travers la membrane pour réagir avec le gaz combustible afin de produire au moins de la vapeur d'eau, et ensuite à recevoir le gaz dans une pompe à vide (10), dans lequel la vapeur d'eau est condensée à partir du courant gazeux en amont de la pompe à vide (10) ou à l'intérieur de celle-ci.

2. Procédé selon la revendication 1, dans lequel la vapeur d'eau est condensée à partir du courant gazeux dans un condenseur (14) situé entre la membrane (20) et la pompe à vide (10).

3. Procédé selon la revendication 1, dans lequel la pompe à vide (10) possède un mécanisme de pompage qui expose le courant gazeux à de l'eau et dans lequel la vapeur d'eau est condensée à partir du courant gazeux.

4. Procédé selon la revendication 3, dans lequel la pompe à vide (10) comprend l'une d'entre une pompe à anneau liquide et une pompe à éjecteur à liquide.

5. Procédé selon l'une quelconque des revendications précédentes, dans lequel la différence de potentiel est appliquée de part et d'autre de la membrane (20) en utilisant une première électrode (24) sur ladite première face de la membrane et une deuxième électrode (26) sur ladite autre face de la membrane (20), et dans lequel au moins l'une des électrodes (24, 26) comprend un matériau catalytique.

6. Procédé selon l'une quelconque des revendications précédentes, dans lequel la membrane (20) est chauffée jusqu'à une température d'au moins 300°C.

7. Procédé selon l'une quelconque des revendications précédentes, dans lequel la membrane (20) se présente sous la forme d'un cylindre possédant un alésage (22) à travers lequel le courant gazeux est aspiré par la pompe à vide (10).

8. Procédé selon l'une quelconque des revendications précédentes, dans lequel la quantité d'oxygène présente dans le courant gazeux en aval de la membrane (20) est détectée, et la différence de potentiel appliquée de part et d'autre de la membrane (20) est contrôlée en réponse à la quantité d'oxygène qui a été détectée.

9. Procédé selon l'une quelconque des revendications précédentes, dans lequel le courant gazeux est acheminé jusqu'à ladite première face de la membrane (20) à une pression inférieure à 10 mbar.

10. Système de pompage d'un courant gazeux contenant un gaz combustible, le système comprenant :
une membrane conductrice ionique (20) ;
une pompe à vide (10) destinée à acheminer le courant gazeux jusqu'à une première face d'une membrane conductrice ionique (20) à une pression inférieure à 50 mbar, l'autre face de la membrane (20) étant exposée à un gaz oxydant ;
des moyens (32) pour appliquer une différence de potentiel de part et d'autre de la membrane (20) de telle sorte que des espèces oxydantes réactive passent à travers la membrane (20) pour réagir avec le gaz combustible afin de produire au moins de la vapeur d'eau ; et
des moyens condenseurs (14, 10) destinés à recevoir le courant gazeux en provenance de la membrane (20), et à condenser la vapeur d'eau provenant du courant gazeux, les moyens condenseurs comprenant, soit :
un condenseur (14) et ladite pompe à vide (10) est située en aval du condenseur (14) pour aspirer le courant gazeux à travers le condenseur (14) ; soit
ladite pompe à vide (10), la pompe à vide ayant un mécanisme de pompage qui expose le courant gazeux à de l'eau et dans lequel la vapeur d'eau est condensée à partir du courant gazeux ; soit
ladite pompe à vide (10), la pompe à vide étant disposée pour recevoir le courant gazeux de la membrane et ayant un mécanisme de pompage qui expose le courant gazeux à de l'eau de façon que la vapeur d'eau soit condensée à partir du courant gazeux.

11. Système selon la revendication 10, dans lequel la pompe (10) comprend l'une d'entre une pompe à anneau liquide et une pompe à éjecteur.

12. Système selon l'une quelconque des revendications 10 et 11, dans lequel la pompe est configurée pour attirer le courant gazeux jusqu'à ladite première face de la membrane (20) à une pression inférieure à 10 mbar.

13. Système selon l'une quelconque des revendications 10 à 12, dans lequel les moyens (32) pour appliquer une différence de potentiel de part et d'autre de la membrane (20) comprennent une première électrode (24) sur ladite première face de la membrane (20) et une deuxième électrode (26) sur ladite autre face de la membrane (20), et dans lequel au moins l'une des électrodes (24, 26) comprend un matériau catalytique.

14. Système selon la revendication 13, dans lequel le matériau catalytique comprend du platine.

15. Système selon l'une quelconque des revendications 10 à 14, comprenant des moyens (28, 30) pour chauffer la membrane (20) jusqu'à une température d'au moins 300°C.

16. Système selon l'une quelconque des revendications 10 à 15, dans lequel la membrane (20) se présente sous la forme d'un cylindre possédant un alésage (22) à travers lequel le courant gazeux est aspiré par la pompe à vide (10).

17. Système selon la revendication 16, comprenant une pluralité desdites membranes (20) raccordées en parallèle.

18. Système selon l'une quelconque des revendications 10 à 17, comprenant un détecteur (50) destiné à détecter la quantité d'oxygène présente dans le courant gazeux en aval de la membrane (20), et un contrôleur (52) destiné à contrôler la différence de potentiel appliquée de part et d'autre de la membrane (20) en réponse à un signal de sortie provenant du détecteur (50).
